# FASCICULE DE BREVET EUROPEEN

(11) **EP 1 644 295 B1**
(45) Date de publication et mention de la délivrance du brevet: **05.08.2020**
(21) Numéro de dépôt: 04741849.6
(22) Date de dépôt: 21.06.2004
(51) Int. Cl.: C03C 17/00, C03C 17/32, B32B 17/10, B41M 5/00

(54) **FORMATION DE MOTIFS SUR VITRAGE**
HERSTELLUNG VON MUSTERN AUF EINER GLASSCHEIBE
PATTERNS ON GLASS

(30) Priorité: 01.07.2003 BE 200300382
(43) Date de publication de la demande: 12.04.2006
(73) Titulaire: AGC Glass Europe, 1348 Louvain-la-Neuve (BE)
(72) Inventeur: JACOBS, Nadia, 6040 Jumet (BE); POELS, Jean-Pierre, décédé (BE)
(74) Mandataire: Bayot, Daisy
(86) Numéro de dépôt international: PCT/EP2004/051183
(87) Numéro de publication internationale: WO 2005/003048

(56) Documents cités:
- EP-A- 0 105 994
- EP-A- 0 234 720
- EP-A1- 1 460 046
- WO-A1-03/045866
- US-A- 5 714 199
- US-A1- 2002 064 616

## Description

L'invention est relative aux vitrages comportant des motifs limitant la transmission lumineuse. Une large part des vitrages automobiles comporte des motifs émaillés destinés à masquer des éléments inesthétiques, notamment des joints de colle, des connexions électriques etc. Traditionnellement ces motifs sont obtenus par application d'une composition comprenant une fritte de verre, des pigments un vecteur dans lequel la fritte et les pigments sont mis en suspension. Différents adjuvants peuvent être aussi inclus pour améliorer les propriétés de la composition, notamment pour stabiliser la suspension ou ajuster les caractéristiques rhéologiques de celle-ci. L'application de ces compositions d'émail est suivie d'une cuisson à température élevée qui fond la fritte et fixe l'émail au support.

Si une large part des vitrages automobiles comporte des motifs de ce type, les vitrages architecturaux ou à usage industriel, peuvent aussi présenter de tels motifs limitant très fortement la transmission lumineuse. Pour cette raison, même si l'invention est d'abord destinée à l'application aux vitrages automobile, elle concerne aussi les autres sortes de vitrages et de façon générale toutes les applications de motifs sur des feuilles de verre, en particulier lorsque ceux-ci présentent dans leur constitution ou dans leur mise en oeuvre, des contraintes notamment en matière de traitements thermiques. A titre indicatif de tels motifs peuvent être appliqués sur des feuilles pour lesquelles un traitement thermique ultérieur serait susceptible de modifier les caractéristiques notamment mécaniques de façon indésirable, par exemple des feuilles ayant subi une trempe thermique préalable.

Par simplification, la suite de la description fait référence essentiellement aux vitrages automobiles, étant entendu que ceci ne limite pas l'objet de l'invention.

Le plus habituellement l'application des motifs émaillés sur le verre est réalisée par une technique de sérigraphie. La composition appliquée est séchée pour éliminer la plus grande part du vecteur, et, soumise à une cuisson destinée à fixer les constituants sur la feuille de verre. La cuisson de la composition d'émail peut être effectuée au cours d'un traitement de formage de la feuille. Les conditions de température dans lesquelles le formage intervient, qu'il s'agisse de trempe ou de bombage, sont telles que la température de fusion de la fritte est largement dépassée.

Une difficulté est d'éviter que la composition fondue n'adhère aux objets au contact de la feuille au cours de cette opération. En particulier dans le bombage d'ensembles comportant deux feuilles identiques destinées à r constituer un vitrage feuilleté, il est nécessaire de prendre des précautions pour que la composition d'émail ne soit pas transférée d'une feuille à l'autre.

Par ailleurs la présence de la composition émaillée sur une feuille de verre entraîne diverses difficultés dans la mise en œuvre de ces opérations de bombage/trempe, en modifiant localement le comportement thermique de la feuille. La présence de l'émail se traduit en effet par une différence sensible d'absorption du rayonnement thermique, entraînant, localement, des différences dans la cinétique de formage. Ces différences, si elles ne sont pas prises en compte dans les conditions de traitement, conduisent à des irrégularités dans le formage.

Les difficultés du type de celles indiquées ci-dessus sont bien connues. Des solutions également connues permettent de dépasser ces difficultés d'autant plus commodément que la forme imposée aux feuilles n'est pas trop complexe. Pour les formes très complexes, il est nécessaire le plus souvent de former les feuilles au moyen d'un pressage partiel qui entraîne nécessairement un contact avec les parties émaillées.

Les vitrages automobiles doivent encore satisfaire à différentes exigences réglementaires. Après usage, notamment, lors de la destruction du véhicule, les vitrages comme les autres pièces doivent pouvoir être réintroduites dans un cycle de fabrication. Le recyclage des vitrages s'effectue nécessairement au stade de la fusion de la composition verrière. L'alimentation des fours verriers comporte ainsi systématiquement une part de calcin et/ou de verre recyclé. En pratique la part la plus importante de verre recyclé concerne les compositions pour lesquelles une certaine flexibilité est permise. C'est en particulier le cas pour les verres de bouteilles. L'utilisation est aussi possible pour des compositions plus exigeantes comme celles utilisées pour la production de vitrages, même si la part de produits recyclés y est plus modeste.

Dans tous les cas le recyclage limite la présence de certains composés dans ces vitrages recyclés, composés qui par exemple peuvent perturber de façon significative le fonctionnement des fours. C'est le cas de certains métaux lourds comme le chrome qui est largement utilisé jusqu'à présent dans les compositions émaillées destinées aux vitrages automobile.

Pour éviter ces difficultés et répondre aux exigences en question, l'invention propose des vitrages tels que définis à la revendication 1.

Ces vitrages comportent des motifs imprimés avec une composition d'encre et non d'une composition d'émail, laquelle ne comporte que des éléments tels que le vitrage soit recyclable dans les fours de verrerie. La mise en oeuvre de cette composition sans fritte ne nécessite pas une « cuisson » à température relativement élevée, telle que celle atteinte avec des compositions d'émaux.

Les encres utilisées pour produire ces motifs sont avantageusement appliquées sur les feuilles de verre après que ces dernières aient été formées lorsqu'elles doivent subir un formage impliquant un traitement à température élevée. En pratique l'application de la composition d'émail par sérigraphie ne peut être mise en oeuvre que sur des feuilles sensiblement planes. L'invention propose donc de procéder par une technique qui permette de s'affranchir des contraintes liées à la forme de la feuille traitée. L'application de la composition est effectuée par une technique de projection de gouttelettes du type « jet d'encre ».

L'impression par « jet d'encre » est utilisée dans de très nombreuses applications et pour les supports les plus variés. EP 732 149 applique la technique sur des bouteilles sans envisager l'opacité des motifs et pour cette raison emploie indifféremment des compositions avec ou sans pigments. EP 1 510 362 de manière analogue emploie des compositions sans pigments. FR 2750419 emploie des compositions d'émail dont les constituants ne sont pas éliminés dans un recyclage par fusion. Par ailleurs compositions dont les constituants peuvent être détruits à haute température sont présents dans des modes d'application du type offset comme dans EP 105994. EP731149A1 décrit des encres pour impression jet d'encre sur du verre, en particulier des substrats fortement courbés (bouteilles). Les encres comprennent un polymère organique et un pigment dispersé; le pigment est en particulier un colorant noir "solvant black 29".

L'application envisagée selon l'invention soulève cependant des problèmes spécifiques. Elle vise des surfaces relativement importantes et qui doivent être revêtues de manière parfaitement contrôlée. L'aspect de la zone imprimée doit être rigoureusement homogène s'agissant d'un revêtement dont le but est d'abord esthétique. Pour les mêmes raisons les motifs doivent avoir des contours très précis en dépit de la difficulté résultant de la nature du support. En outre, lorsqu'il s'agit de remplacer les émaux opaques la composition sous une très faible épaisseur doit conduire à l'opacité requise. Cette dernière condition, combinée aux précédentes, est particulièrement difficile à satisfaire dans les impressions du type jet d'encre. En effet, une forte opacité sous une faible épaisseur nécessite une quantité importante de particules opacifiantes déposées par unité de surface. Par ailleurs les techniques jet d'encre mettent en œuvre des compositions qui doivent être stabilisées très rapidement après leur application sur le support. En conséquence le volume appliqué est nécessairement relativement limité par exemple pour favoriser une rapide élimination des vecteurs que la composition peut comporter. Ces deux conditions font que les compositions utilisées doivent présenter des concentrations en particules opacifiantes importantes. Ces concentrations conduisent souvent à des conditions rhéologiques difficilement compatibles avec les techniques jet d'encre.

Pour répondre à ces difficultés les inventeurs ont également développé des compositions applicables par jet d'encre conduisant sous de très faibles épaisseurs à une forte opacité, compositions qui par ailleurs sont bien adaptées au support verrier.

Les compositions appliquées selon l'invention sont à base de particules opacifiantes, en d'autres termes des pigments, de polymères et d'additifs permettant d'ajuster au mieux les caractéristiques de ces encres.

Ces additifs sont utilisés notamment pour améliorer la stabilité de la composition avant son utilisation. Il s'agit alors de dispersants maintenant les pigments en suspension. Ils servent aussi à ajuster la viscosité de la préparation. Ils permettent également de faire en sorte que la composition projetée soit bien compatible avec la nature de la surface du support verrier. La composition doit mouiller convenablement la surface pour qu'elle adhère suffisamment. A l'inverse, la couche appliquée ne doit pas s'étendre au-delà des limites définies du motif.

D'autres adjuvants sont encore plus spécifiques des applications visées. Ainsi pour les vitrages feuilletés il peut s'agir de faire en sorte d'améliorer la compatibilité de la couche imprimée avec la feuille intercalaire qui peut être à son contact comme on le verra plus loin.

Comme il ressort des indications précédentes, l'utilisation de compositions à base d'un ou plusieurs polymères organiques constitue une caractéristique de l'invention, qui la distingue des compositions d'émail habituellement mises en oeuvre. L'utilisation de matériaux organiques est rendue possible en raison de ce que l'application est faite sur des feuilles de verre qui ne subissent plus de formage thermique. La composition n'est donc pas soumise à des températures qui pourraient conduire à la destruction des polymères qu'elle contient.

En pratique les feuilles de verre revêtues des motifs selon l'invention ne sont éventuellement soumises qu'à des températures compatibles avec les matériaux en question. Il s'agit notamment pour les vitrages feuilletés, des opérations d'assemblage comprenant un passage à l'étuve et sous pression. La température dans ce type d'opération se situe normalement aux environs de 150°C, température parfaitement supportable par les polymères choisis.

En pratique encore, les polymères doivent satisfaire à un certain nombre de conditions. La nature du polymère et son mode de formation éventuel au moment même de l'utilisation, ne sont pas limitatifs pour autant que ceux-ci soient appropriés aux conditions requises pour l'impression jet d'encre.

Parmi les contraintes imposées par ce mode d'application, comme déjà indiqué, il faut que la composition présente une viscosité limitée. La viscosité au moment du passage dans les buses de projection ne doit pas dépasser 100cP, de préférence est inférieure à 50cP et, avantageusement, se situe aux environs de 2 à 25cP.

La viscosité préférée est en partie fonction de la technique de projection des gouttelettes. Les techniques « ink-jet » comprennent deux modes principaux de distribution des gouttelettes. Il s'agit soit du mode « continu », soit du mode « goutte à la demande » (« drop on demand »). Pour le mode « à la demande », la viscosité est en règle générale un peu plus élevée et se situe de préférence aux environs de 10 à 20cP. Pour le mode continu, les viscosités préférées sont de l'ordre de 1 à 10cP.

La viscosité de la composition est fonction des constituants de celle-ci. Elle dépend aussi pour une part importante de la température à laquelle la composition est portée. Pour faciliter l'utilisation de compositions relativement visqueuses, il est usuel de les porter à une température supérieure à la température ambiante.

Les têtes de projection usuelles sont faites de telle sorte qu'elles puissent maintenir les compositions à des températures qui peuvent atteindre une centaine de °C, diminuant d'autant la viscosité de ces compositions.

En pratique la température dans l'installation de projection, et en particulier dans les buses de projection, ne dépasse pas 80°C, et de préférence se situe entre 20 et 60°C.

Les polymères entrant dans les compositions appliquées selon l'invention, sont soit préalablement formés, soit sont formés au moins en partie par réaction ou réticulation au moment de leur application ou immédiatement après celle-ci. Dans ce dernier cas les éléments mis en présence sont de masse moléculaire plus limitée, ce qui permet de maintenir la viscosité de la composition à des valeurs suffisamment faibles au moment de la projection. De tels polymères sont formés par activation sous UV, par polymérisation cationique, ou par réaction radicalaire.

L'intérêt de principe des produits polymères constitués réagissant au moment de l'application est de conduire à des structures plus réticulées, qui pour cette raison sont normalement plus dures et donc plus résistantes à l'abrasion. Leur adhérence est aussi normalement relativement bonne. Leur mise en œuvre est néanmoins sensiblement plus compliquée que celle des produits utilisés en solution. Ils nécessitent des équipements supplémentaires pour éviter une réaction prématurée, et assurer cette réaction immédiatement après l'application. Pour ces raisons, selon l'invention, les compositions comportant des polymères en solution dans des solvants sont avantageusement utilisées.

Dans les polymères utilisés en solution, il est préférable de choisir ceux correspondant à un poids moléculaire relativement faible. Ils sont en règle générale plus solubles et conduisent à des viscosités moindres pour une même masse en solution. De ce fait, toutes proportions gardées par ailleurs, on peut limiter la quantité de solvants mise en œuvre et en conséquence rendre leur élimination plus aisée. Néanmoins, la masse moléculaire des polymères influe sur certaines propriétés des couches opaques, en particulier sur leur dureté ou leur adhérence à la feuille de verre ou, le cas échéant, à la feuille intercalaire pour les vitrages feuilletés. Pour cette raison il peut être utile de rechercher un compromis entre une grande solubilité et la qualité finale de la couche. Dans ce sens il est avantageux selon l'invention d'utiliser une composition comprenant plusieurs polymères de masses moléculaires différentes.

De façon analogue, pour ce qui concerne la nature des polymères, les meilleures caractéristiques de solubilité ne sont pas nécessairement celles qui offrent aussi les meilleures propriétés notamment mécaniques. Pour cette raison également, les compositions selon l'invention, peuvent avantageusement comprendre une pluralité de polymères.

Des familles de polymères préférées sont celles dont on sait qu'elles permettent d'obtenir un bon contact avec le verre. Parmi celles-ci des polymères préférés sont ceux du type des résines phénoliques (novolaques) ou époxy, et plus encore les résines acryliques.

Des résines particulièrement préférées sont constituées de polymères styrène-acryliques. Parmi ces polymères on choisit avantageusement ceux de masse moléculaire de l'ordre de 1000 à 8000. Leur solubilité pour les viscosités requises, peut atteindre ou même dépasser 30% de la masse totale de la composition. Avantageusement la masse des polymères dans la composition est comprise entre 5 et 25%. Des polymères type, utilisables selon l'invention sont ceux commercialisés sous le nom «Joncryl» par la société Johnson Polymer, et notamment les produits Joncryl 586, 680 et 682 dont les masses moléculaires moyennes sont données respectivement à 4600, 4800 et 1800.

Avec les polymères de masse moléculaire relativement faible, il est avantageux d'utiliser en complément un ou plusieurs polymères de masse élevée. Un choix avantageux pour ces derniers est constitué par des polymères dont on connaît l'excellente tenue en contact avec le verre. Dans ce sens il est intéressant d'introduire dans la composition une certaine teneur d'acétal-polyvinyliques, et particulièrement de polyvinylbutyral(PVB), communément utilisé pour constituer les feuilles intercalaires des vitrages feuilletés. Les PVB adhèrent particulièrement bien au verre. Ils facilitent aussi un bon contact de la couche opaque avec les feuilles intercalaires dans le cas de vitrages feuilletés.

Les PVB ont en général une masse moléculaire moyenne trop élevée pour pouvoir être utilisés seuls. Ils sont en revanche utile en association avec des polymères de masse moléculaire plus faible, comme ceux indiqués précédemment. Dans les compositions selon l'invention ils représentent avantageusement jusqu'à 8% de la masse totale, et de préférence jusqu'à 4%, mais des teneurs allant jusqu'à 2% sont avantageusement mises en œuvre.

Le choix des solvants est également déterminant pour la capacité de la composition à satisfaire aux différentes exigences liées à la fois au mode d'application et aux propriétés requises pour la couche finale.

En premier le solvant ou mélange de solvants doit assurer une bonne solubilité des polymères et garantir une viscosité adéquate aux concentrations choisies. Le solvant ou mélange de solvants doit aussi s'éliminer facilement après application. Il doit encore montrer une bonne compatibilité avec la surface du verre. La composition doit convenablement «mouiller» le verre. Par ailleurs le bon fonctionnement des buses de projection requiert que la composition présente une tension superficielle suffisante. Cette dernière est avantageusement supérieure à 25 et de préférence, 30 dynes/cm. Il s'agit donc là également d'établir un compromis entre les qualités de mouillabilité de la composition vis-à-vis du verre, et le maintien d'un contact limité avec les buses de projection qui ne perturbe pas le bon fonctionnement de ces buses. Dans ces considérations le choix des solvants est très significatif.

Des solvants utilisés selon l'invention sont en particulier le diacétone alcool qui est un bon solvant des polymères utilisés selon l'invention. Des diesters alcool sont également de bons solvants. Conviennent encore, notamment dans des compositions comprenant un ensemble de solvants, l'isopropanol qui permet d'abaisser la tension superficielle, et donc d'améliorer le contact avec le verre. L'éthylène glycol peut également entrer au moins pour partie dans la constitution du mélange de solvants. Il est difficile à utiliser seul en raison de sa faible volatilité.

Le solvant intervient aussi dans la dispersion des particules assurant l'opacité de la composition. Le méthoxy-propanol, en fonction de la nature des particules utilisées, et notamment lorsque du graphite est choisi, peut faciliter cette dispersion. Il est donc avantageusement introduit dans le mélange de solvants utilisé.

Des exemples de polymères susceptibles de réticulation par exposition aux UV et réagissant par des radicaux libres, utilisables selon l'invention sont notamment ceux du type commercialisé sous le nom « Sartomer », et notamment les produits Sartomer 453, 499 et 9003. Lorsque ces produits sont choisis ils sont associés avec des composants photo-initiateurs et des adjuvants permettant d'ajuster les caractéristiques rhéologiques des compositions.

Les polymères réticulant sous les UV par des réactions cationiques, sont avantageusement ceux du type époxy, et notamment ceux commercialisés sous le nom « UVR-6110 » par la société Union Carbide.

Pour améliorer l'adhérence au verre il est possible encore selon l'invention d'introduire des composants qui comportent des groupements qui s'apparentent à ceux qui se trouvent à la surface du support. Dans ce sens, selon l'invention, il peut être avantageux d'introduire dans la composition notamment des produits de type siloxanes. L'introduction de ces composés doit être particulièrement maîtrisée car elle peut avoir des effets sur la stabilité de la composition. En particulier elle peut entraîner dans certains cas une agglomération des particules en suspension, et par suite une mauvaise distribution de ces particules ou même, perturber le fonctionnement des buses de projection.

Dans le cas où la stabilité de la composition est réduite par la présence de certains constituants, il peut être préférable d'introduire ceux-ci immédiatement avant la mise en oeuvre de cette composition. Dans de telles dispositions on tient compte d'abord de la durée de séjour de la composition dans la tête d'impression. En fonctionnement stabilisé, cette durée de séjour est de l'ordre d'une minute ou moins. La stabilité de la composition, dans tous les cas, doit être garantie pour des durées de cet ordre, et de préférence pour des durées sensiblement plus longues.

Si les produits favorisant l'adhérence au support, comme les siloxanes, sont susceptibles de perturber la composition appliquée par jet d'encre, une solution consiste à prévoir de les appliquer séparément au cours d'une première étape, laquelle peut être un procédé de type ink-jet, mais aussi par toute autre technique. En particulier il est possible de traiter la totalité de la surface support par immersion ou par écoulement d'un rideau liquide, sans se limiter aux parties du vitrage destinées à recevoir les motifs imprimés.

La méthode de projection par jet d'encre permet des applications sur des surfaces complexes ce qui n'est pas le cas de la sérigraphie. Cette méthode est donc bien adaptée pour l'application sur des vitrages préformés. Les volumes de composition appliqués sont relativement faibles en raison même du mode de projection. S'agissant de surfaces importantes, et du fait que la couche doit pouvoir conduire le cas échéant à une opacité quasi complète, il faut encore que la composition puisse offrir une teneur en particules suffisamment importante pour que la durée de l'application soit aussi brève que possible.

La teneur en particules conditionne aussi les caractéristiques notamment rhéologiques de la composition. Cette teneur doit rester compatible avec la viscosité recherchée. Par ailleurs, fonction également de la nature de ces particules, des teneurs trop élevées peuvent conduire à des amas qu'il n'est pas possible de disperser convenablement même en présence de dispersants puissants.

Dans tous ces mécanismes la taille des particules intervient aussi. Pour que ces particules confèrent à la couche déposée une certaine opacité, il faut que leurs dimensions soient supérieures aux longueurs d'onde du rayonnement visible. En pratique les particules ne sont pas de dimensions moyennes inférieures à 0,2µ. Inversement pour avoir la meilleure opacification possible pour une masse donnée de particules, il est avantageux que celles-ci soient de dimensions aussi petites que possible.

Les dimensions des particules sont aussi conditionnées par le mode d'application. Les orifices des buses de projection limitent la dimension des particules.

En pratique les particules utilisées sont inférieures en moyenne à 10µ, le plus souvent inférieures à 5µ, et de préférence, inférieures à 2µ.

Le choix de particules aussi petites que possible facilite en outre la production de compositions relativement stables pour autant que la nature des particules soit convenablement choisie. Dans ce sens intervient notamment la masse volumique de ces particules. Plus celle-ci est voisine de celle du reste des constituants de la composition, mieux la stabilité est assurée.

Parmi les pigments identifiés comme potentiellement utilisables pour assurer une bonne opacité, les oxydes de fer ont pour inconvénient de présenter une trop forte masse volumique. Ils ont en conséquence une tendance à sédimenter. Les particules minérales, notamment les oxydes utilisés habituellement dans les émaux pour l'opacification des vitrages, présentent dans l'ensemble les mêmes inconvénients que ceux des oxydes de fer. Par ailleurs l'utilisation des oxydes de métaux lourds, notamment de chrome, comme indiqué plus haut fait l'objet d'une réglementation de plus en plus contraignante. Il est donc préférable d'utiliser des particules dont l'utilisation répond aux exigences réglementaires, notamment en terme d'aptitude au recyclage pour les produits arrivant en fin d'utilisation.

Dans ce sens, selon l'invention, il est avantageux d'utiliser des produits organiques qui pourront être brûlés lors du recyclage du verre dans les fours d'élaboration des compositions verrières.

Le mode d'application de la couche opacifiante selon l'invention, offre la possibilité d'utiliser des produits qui ne peuvent être mis en oeuvre dans les impressions traditionnelles.. L'avantage de la projection par jet d'encre est que celle-ci peut être effectuée sur le vitrage préalablement formé, et dans des conditions de température relativement basses.

Pour ces raisons on utilise de préférence selon l'invention des compositions comportant des particules organiques.

Si des pigments, tels qu'utilisés dans les peintures permettent de conférer des couleurs variées aux compositions utilisées selon l'invention, le plus usuellement la couche recherchée est de couleur noire ou grise très sombre. Dans ces conditions des particules préférées sont à base de graphite ou de noir de charbon, particules qui, aux dimensions indiquées précédemment, offrent une opacité particulièrement poussée. En outre, ces particules présentent une masse volumique qui est bien adaptée à celle des compositions (polymères, solvants...) dans lesquelles elles sont incorporées.

Les particules de carbone ou graphite ont encore l'avantage, par rapport aux oxydes métalliques, de ne pas être polaires, et d'être bien compatibles avec les solvants utilisés. Leur dispersion dans la composition en est facilitée.

Pour les motifs utilisés sur les vitrages pour dissimuler les éléments sous-jacents, l'opacité requise est telle que la transmission lumineuse soit bien inférieure à 1%. L'exigence habituelle dans ce domaine est une transmission lumineuse qui n'est pas supérieure à 0,1%. Comme indiqué précédemment cette opacité doit être atteinte pour une couche nécessairement d'épaisseur très faible. Une telle opacité est obtenue avec les compositions comportant des particules de carbone de dimensions de l'ordre de 0,5µ pour une épaisseur de la couche comportant l'équivalent d'environ 2µ d'épaisseur de carbone, soit, avec les polymères, une couche complète de l'ordre de 5µ d'épaisseur. Cette couche, pour une composition utilisant des solvants, correspond au dépôt d'une épaisseur de l'ordre de 10 à 12µ de composition avant séchage. Une telle épaisseur peut être déposée par projection de gouttelettes dans des temps compatibles avec les exigences de production industrielle. Bien entendu, il est possible de procéder à un dépôt d'encre plus volumineux par unité de surface. Le temps nécessaire en est allongé d'autant. Pour rester dans des conditions d'application industriellement acceptables, l'épaisseur de la couche d'encre déposée n'est pas de préférence supérieure à 30µ et le plus souvent est inférieure à 20µ.

De façon générale les couches formées sur les vitrages selon l'invention sont d'épaisseur relativement faible en raison du mode d'application jet d'encre. En pratique l'épaisseur des couches sèches ne dépasse pas ordinairement 20µ et de préférence 15µ. Elle est le plus souvent inférieure ou égale à 10µ et peut être aussi faible que, ou même inférieure, à 5µ.

Si la teneur en particules est la plus élevée possible pour accroître l'opacité de la couche déposée, elle est limitée par les caractéristiques de la composition projetée. Comme la teneur en polymères, celle en particules accroît la viscosité de la composition. Compte tenu de l'ensemble des constituants entrant dans la composition, la masse des particules est de préférence au plus égale à 35% de la composition, et de préférence au plus égale à 25%. La proportion de particules dans la couche est évidemment beaucoup plus importante du fait de l'élimination des solvants.

Comme indiqué la composition projetée peut encore contenir différents adjuvants. En particulier la composition renferme avantageusement des dispersants favorisant la distribution homogène des particules en suspension. Pour les particules organiques par exemple, et celles notamment de carbone, des dispersants appropriés sont constitués par des produits à faible polarité qui ont une forte affinité pour les particules. La quantité de ces dispersants qui jouent aussi le rôle de solvant peut être relativement importante. Elle est fonction de la teneur en particules, et peut s'élever jusqu'à représenter un tiers de la masse des particules. A titre indicatif des dispersants pour ces compositions sont par exemple ceux vendus par la société Avecia sous le nom commercial de « Solsperse », notamment ceux référencés Solsperse 5000 et 20000.

Les compositions utilisées selon l'invention peuvent aussi contenir des produits tensioactifs destinés à contrôler la capacité de mouillage du verre. D'autres adjuvants peuvent aussi être introduits pour éviter le « moussage » de la composition.

L'application par jet d'encre de motifs sur des vitrages de forme complexe ne se limite pas nécessairement aux bandes opaques dissimulant l'emplacement du collage ou tout autre élément inesthétique. La même technique peut être utilisée pour la mise en place de tout élément décoratif ou d'identification que celui-ci soit ou non opaque. Il va de soi que lorsque la contrainte liée à l'opacité est atténuée, il est d'autant plus facile d'établir une composition susceptible d'être projetée par cette technique, les conditions de viscosité, notamment, étant d'autant plus facilement satisfaites.

Les compositions appliquées selon l'invention doivent encore conduire à des motifs aussi résistant mécaniquement que possible. Ceci comme indiqué précédemment est obtenu par un choix approprié, notamment des polymères ou mélange de polymères entrant dans la composition de l'encre. Quel que soit ce choix, la résistance à l'abrasion, leur dureté notamment, restent néanmoins inférieures à celles des compositions émaillées traditionnelles.

Dans la pratique les motifs réalisés sont utilisés dans des conditions pour lesquelles ces propriétés n'ont qu'une importance relative. Il s'agit en particulier d'incorporer ces motifs dans des assemblages qui les mettent à l'abri des risques d'abrasion ou d'attaque chimique. C'est le cas en particulier des vitrages feuilletés. Pour ces derniers les motifs imprimés sont avantageusement disposés entre les feuilles constituant le vitrage, que celui-ci comporte deux feuilles de verre assemblées au moyen d'un intercalaire du type PVB, ou encore que le vitrage soit du type dit « bi-layer », composé d'une feuille de verre associée à une feuille organique de type polyuréthane. Les motifs peuvent encore être appliqués sur une face « interne » de vitrages multiples. Enfin lorsqu'une seule feuille de verre est utilisée, les motifs imprimés, qui seraient exposés à des risques de dégradation mécanique ou chimique, peuvent être protégés par un revêtement protecteur appliqué soit uniformément sur tout le vitrage soit localement sur les motifs.

Lorsque les motifs sont ainsi protégés, en particulier dans les vitrages feuilletés, l'importance de la résistance mécanique est limité à la nécessité de pouvoir subir sans dommage les opérations d'assemblage. Dans ce cas particulier toute l'attention est reportée sur la compatibilité des motifs avec les éléments au contact desquels il se trouve, notamment avec les feuilles intercalaires du type PVB.

Dans tous les cas, les motifs appliqués sur les vitrages selon l'invention résistent avantageusement au vieillissement aux UV. Ils sont de préférence tels que dans le test de vieillissement de 3000h au Q-panel (norme ASTM G53, sans eau, à 60°C, irradiation continue UVA 340nm) la variation δ E reste inférieure à 2.

Dans les vitrages feuilletés les motifs appliqués selon l'invention résistent aussi avantageusement à l'humidité. Aux tests selon les normes EN 12 543-4 ou CER43, soit 14 jours à 95% d'humidité à 50°C, ou par immersion 2h dans l'eau bouillante, aucune formation de bulle n'est induite.

Les installations pour l'application jet d'encre sur des vitrages complexes comprennent nécessairement un ensemble robotisé piloté de façon numérique. La complexité de forme des pièces traitées, commande le nombre de degrés de liberté du robot utilisé. Pour les pièces les plus complexes, le robot peut ainsi présenter jusqu'à six axes de rotation. Dans la pratique le robot porte le plus souvent la ou les têtes de projection. Ces dernières par leurs dimensions sont généralement facilement mobilisables par le robot pour s'adapter aux formes du vitrage, même si en principe le mouvement relatif de la tête de projection et du vitrage peut aussi bien résulter d'un mouvement du vitrage.

Les têtes de projection sont munies de buses multiples pour assurer une application aussi rapide que possible. Les dimensions de ces têtes doivent tenir compte de la complexité de la surface traitée. Les buses doivent nécessairement être maintenues à une faible distance de la surface traitée, distance qui doit être pratiquement la même pour toutes les buses afin d'assurer une bonne qualité du revêtement. La largeur de la tête est donc fonction de la courbure du vitrage.

Pour les bandes opaques présentant une certaine largeur on utilise par exemple une tête comportant 252 buses, chaque buse pouvant être subdivisée encore, par exemple en trois, pour augmenter la capacité de projection.

Les exemples suivants illustrent l'invention de manière non limitative.

### Exemple 1.

Dans un premier temps des particules de noir de carbone commercialisé sous le nom « Régal 660 Carbon Black » sont mises en dispersion dans un mélange comprenant en poids :

### Dispersion 1

| Produit | Quantité |
|---|---|
| Noir de Carbone | 12.6% |
| Solsperse 5000 | 0.1% |
| Solsperse 20000 | 4.2% |
| Methoxy propanol | 4.2% |
| Diacétone alcool | 78.9% |

Le mélange est passé pendant deux heures dans un malaxeur à billes tournant à 3500 tours /min, pour homogénisation.

Cette dispersion est ensuite complétée pour constituer une encre de composition suivante :

### Encre 1 :

| Produit | Quantité |
|---|---|
| Dispersion 1 | 70% |
| PVB BN18 | 3.5% |
| Silane A1100 | 5% |
| Tego flow 300 | 0.5% |
| Diacétone alcool | 21% |

Le Tego flow est un agent tensioactif. Le silane est destiné à améliorer les propriétés d'adhérence sur le verre.

L'encre obtenue, présente une viscosité de 13,9 cP. Cette encre est filtrée à 1µ. Elle est appliquée en bande de 10cm de large sur une feuille de verre clair de 2,1mm d'épaisseur à l'aide d'une tête d'impression à jet d'encre Xaar 500 à 45°C. La résolution de l'impression est 1230dpi. La couche est séchée. La transmission lumineuse mesurée est inférieure à 0,1%.

### Exemple 2.

Comme à l'exemple 1, on prépare une dispersion de composition :

### Dispersion 2

| Produit | Quantité |
|---|---|
| Noir de Carbone | 10% |
| Solsperse 5000 | 0.5% |
| Solsperse 20000 | 2.2% |
| Diacétone alcool | 87.3% |

On prépare par ailleurs un vernis comportant une résine acrylique de composition :

### Vernis

| Produit | Quantité |
|---|---|
| Diacétone alcool | 85% |
| PVB BN18 | 5% |
| Joncryl 682 | 10% |

L'encre est obtenue par mélange de la dispersion, du vernis et des divers additifs dans les proportions suivantes :

### Encre 2

| Produit | Quantité |
|---|---|
| Dispersion 2 | 40% |
| Vernis 2 | 56.5% |
| Tego Glide 100 | 1% |
| Dow Corning 25 | 2% |
| EFKA 34 | 0.5% |

Le Dow Corning 25 est un promoteur d'adhésion, et EFKA 34 un anti-moussant.

La composition est imprimée avec une tête d'impression Trident 192/32 Ultrajet II. La même résolution est appliquée. La transmission lumineuse est analogue à celle de la première encre. L'encre résiste à un vieillissement de 3000h au Q-panel (Norme ASTM G53 , sans eau, chauffe à 60°C et irradiation UV continue avec une lampe UVA 340 nm).

### Exemple 3

On reproduit une encre comme à l'exemple 2, avec les compositions suivantes :

### Dispersion 3

| Produit | Quantité |
|---|---|
| Noir de Carbone | 10% |
| Solsperse 5000 | 0.5% |
| Solsperse 20000 | 2.2% |
| Diacétone alcool | 87.3% |

### Vernis 3

| Produit | |
|---|---|
| Diacétone alcool | 76.6% |
| Alnovol PN320 | 23.4% |

### Encre 3

| Produit | Quantité |
|---|---|
| Dispersion 3 | 40% |
| Vernis 3 | 58% |
| Dow Corning 25 | 2% |

L'utilisation de l'alnovol, qui est une résine de type novolaque, permet d'améliorer la compatibilité de l'encre avec le PVB et notamment d'éviter les phénomènes de délamination lors d'impacts.

### Exemple 4

Il s'agit dans ce cas d'une encre réticulable sous UV

### Dispersion 4

| Produit | Quantité |
|---|---|
| Noir de carbone | 27.3% |
| Solsperse 5000 | 1.5% |
| Solsperse 32000 | 6% |
| DVE-3 (ISP) | 65.2% |

### Encre 4

| Produit | Quantité |
|---|---|
| Dispersion 4 | 37.9% |
| DVE-3 | 34.9% |
| UVR 6110 résine epoxy | 22.7% |
| CGI 552 photoinitiateur | 3% |
| UVI 6990 photoinitiateur | 1.5% |

Le DVE-3 (commercialisé par International Speciality Product) est un triethylene glycol divinylether utilisé comme co-monomère.

L'UVR 6110 est un 3,4 epoxycyclohexylmethyl-3,4-epoxy cyclohexane carboxylate commercialisé par Union Carbide.

Le CGI 552 de CIBA est un photo-initiateur cationique et l'UVI 6990 de Union Carbide est une solution contenant 50% en poids de photo-initiateur.

Cette encre est réticulée sous une lampe UV de 500W et donne une résistance à la griffe accrue : 1000g au test Clemen. Elle est également favorable pour les applications en vitrage feuilleté.

### Exemple 5

Il s'agit aussi d'une encre réticulable sous UV.Dispersion 5

| Produit | Quantité |
|---|---|
| Noir de carbone | 27.3% |
| Solsperse 5000 | 1.5% |
| Solsperse 32000 | 6% |
| DVE-3 (ISP) | 65.2% |

### Encre 5

| Produit | Quantité |
|---|---|
| Dispersion 5 | 14.7% |
| DVE-3 | 58.1% |
| UVR 6110 résine epoxy | 22.7% |
| CGI 552 photo-initiateur | 3% |
| UVI 6990 photo-initiateur | 1.5% |

La composition est imprimée à l'aide d'une tête Trident 192/32 Ultrajet II à une résolution de 2000 dpi.

Cette composition moins chargée en pigment facilite la réticulation sous UV tout en conservant l'opacité et les propriétés de l'encre 4.

### Exemple 6

L'encre aura préférentiellement une composition dans les intervalles tels que repris ci-dessous

### Encre 6

| Produit | Quantité |
|---|---|
| Noir de Carbone | 3-10% |
| Diacétone alcool | 50-90% |
| Methoxy propanol | 0-30% |
| IPA | 0-10% |
| Joncryl 682 | 0-15% |
| PVB BN 18 | 0-10% |
| Solsperse 20000 | 0.5-5% |
| Solsperse 5000 | 0-5% |
| Epoxy silane | 0-10% |

La composition de l'encre peut être ajustée afin d'obtenir une viscosité de 5 à 30cP. Une opacité inférieure à 0.1% peut-être obtenue. La teinte est caractérisée par L*<5, -1<a*<1 et -1<b*<1 et un vieillissement de 3000h au Q-panel (ASTM G53, sans eau, 60°C et avec lampe UVA 340nm) entraîne un delta E inférieur à 2.

Lorsque le verre imprimé est feuilleté, lors d'un test de résistance à haute température (immersion de 2 heures dans l'eau bouillante EN 12 543 -4 ou CER43) l'encre n'induit pas de bulle et passe le test à l'humidité (14 jours 50°C, 95% humidité décrit dans les normes EN 12 543 -4 ou CER43).

## Revendications

1. Vitrage comportant des motifs imprimés notamment à faible transmission lumineuse, dans lequel les motifs sont formés sur une feuille de verre par une technique de jet d'encre, au moyen d'une composition à base d'au moins un polymère organique, et comprenant des particules opacifiantes dispersées, les constituants de l'encre étant choisis de telle sorte que le vitrage puisse être recyclé après usage dans les fours de verrerie les particules opacifiantes sont de nature permettant leur élimination par combustion dans les fours de verrerie, les motifs imprimés présentent, indépendamment de la transmission de la feuille de verre, une transmission lumineuse qui n'est pas supérieure à 1% de la lumière incidente.

2. Vitrage selon la revendication 1 dans lequel les motifs imprimés sont recouverts par au moins une feuille qui s'étend au moins sur lesdits motifs et qui les protège de telle sorte qu'ils sont protégés contre les agressions chimiques ou mécaniques.

3. Vitrage selon la revendication 2 dans lequel les motifs imprimés sont protégés par un vitrage du type dit « bi-layer », composé d'une feuille de verre associée à une feuille organique de type polyuréthane.

4. Vitrage selon la revendication 2 constitué de façon feuilletée, au moins une des feuilles de verre constituant l'assemblage recevant les motifs imprimés sur la face tournée vers la feuille intercalaire plastique.

5. Vitrage selon l'une des revendications 3 ou 4 dans lequel l'épaisseur du revêtement sec, n'est pas supérieure à 20µ.

6. Vitrage selon l'une des revendications précédentes dans lequel le ou les polymères de la composition projetée par jet d'encre, sont en solution dans des solvants, lesquels solvants sont éliminés par séchage après projection sur le vitrage.

7. Vitrage selon l'une des revendications précédentes dans lequel la viscosité de la composition est maintenue inférieure à 100 mPa.s (cP) et de préférence 50 mPa.s (cP) par ajustement des teneurs en polymères, en particules et en solvants.

8. Vitrage selon l'une des revendications précédentes dont la composition utilisée pour l'impression par jet d'encre comprend des polymères du groupe comprenant les polymères acryliques, les polymères de type novolaque et ceux de type époxy.

9. Vitrage selon l'une des revendications précédentes dans lequel la composition projetée comporte au plus 30% et de préférence au plus 25% en poids de polymère.

10. Vitrage selon l'une des revendications précédentes dans lequel les particules opacifiantes sont de nature organique.

11. Vitrage selon l'une des revendications 1 à 10 dans lequel les particules opacifiantes sont constituées de graphite ou de noir de carbone.

12. Vitrage selon l'une des revendications précédentes dans lequel le ou les particules ont une granulométrie inférieure à 10 et de préférence inférieure à 5µm.

13. Vitrage selon l'une des revendications précédentes dans lequel la composition projetée comporte au plus 35% en poids de particules, et de préférence au plus 25%.

14. Vitrage selon l'une des revendications précédentes dans lequel la composition projetée comporte au moins une partie des polymères constituée de polyvinylbutyral.

15. Vitrage selon l'une des revendications précédentes dans lequel la composition projetée comporte en outre un composé siloxane.

16. Vitrage selon l'une des revendications précédentes sur lequel la composition est projetée par jet d'encre sur la surface préalablement formée dans une opération de bombage/trempe.

## Patentansprüche

1. Verglasung, umfassend aufgedruckte Muster, insbesondere mit schwacher Lichtdurchlässigkeit, wobei die Muster auf einer Glasscheibe durch eine Tintenstrahltechnik mit einer Zusammensetzung auf der Basis mindestens eines organischen Polymers gebildet sind und dispergierte deckende Partikel umfassen, wobei die Bestandteile der Tinte derart ausgewählt sind, dass die Verglasung nach der Verwendung in Glasschmelzöfen recycliert werden kann, wobei die deckenden Partikel der Art sind, dass ihre Eliminierung durch Verbrennung in den Glasschmelzöfen gestattet wird, wobei die aufgedruckten Muster unabhängig von der Durchlässigkeit der Glasscheibe eine Lichtdurchlässigkeit aufweisen, die nicht größer ist als 1 % des einfallenden Lichts.

2. Verglasung nach Anspruch 1, wobei die aufgedruckten Muster durch mindestens eine Folie bedeckt sind, die sich mindestens über die Muster erstreckt, und die sie derart schützt, dass sie gegen chemische oder mechanische Angriffe geschützt sind.

3. Verglasung nach Anspruch 2, wobei die aufgedruckten Muster durch eine Verglasung des Typs geschützt sind, die als "Doppelschicht" bezeichnet wird, bestehend aus einer Glasscheibe, die mit einer organischen Folie vom Typ Polyurethan assoziiert ist.

4. Verglasung nach Anspruch 2, welche auf laminierte Weise ausgebildet ist, wobei mindestens eine der Glasscheiben, die die Anordnung bilden, die aufgedruckten Muster auf der Fläche aufnimmt, welche der Kunststoffzwischenfolie zugewandt ist.

5. Verglasung nach einem der Ansprüche 3 oder 4, wobei die Dicke der trockenen Beschichtung nicht größer ist als 20 µ.

6. Verglasung nach einem der vorhergehenden Ansprüche, wobei das oder die Polymere der durch einen Tintenstrahl aufgesprühten Zusammensetzung in Lösung in Lösungsmitteln sind, wobei die Lösungsmittel durch Trocknen nach dem Aufsprühen auf die Verglasung eliminiert werden.

7. Verglasung nach einem der vorhergehenden Ansprüche, wobei die Viskosität der Zusammensetzung unter 100 mPa.s (cP) und vorzugsweise 50 mPa.s (cP) durch Einstellen der Gehalte an Polymeren, in den Partikeln und Lösungsmitteln, gehalten wird.

8. Verglasung nach einem der vorhergehenden Ansprüche, wobei die Zusammensetzung, die für das Aufdrucken durch einen Tintenstrahl verwendet wird, Polymere der Gruppe umfasst, die Acrylpolymere, Polymere vom Typ Novolak und jene vom Typ Epoxy umfasst.

9. Verglasung nach einem der vorhergehenden Ansprüche, wobei die aufgesprühte Zusammensetzung höchstens 30 % und vorzugsweise höchstens 25 Gew.-% Polymer umfasst.

10. Verglasung nach einem der vorhergehenden Ansprüche, wobei die deckenden Partikel organischer Natur sind.

11. Verglasung nach einem der Ansprüche 1 bis 10, wobei die deckenden Partikel aus Graphit oder Ruß bestehen.

12. Verglasung nach einem der vorhergehenden Ansprüche, wobei das oder die Partikel eine Granulometrie von weniger als 10 und vorzugsweise weniger als 5 µm aufweisen.

13. Verglasung nach einem der vorhergehenden Ansprüche, wobei die aufgesprühte Zusammensetzung höchstens 35 Gew.-% Partikel und vorzugsweise höchstens 25 % umfasst.

14. Verglasung nach einem der vorhergehenden Ansprüche, wobei die aufgesprühte Zusammensetzung mindestens einen Teil von Polymeren umfasst, bestehend aus Polyvinylbutyral.

15. Verglasung nach einem der vorhergehenden Ansprüche, wobei die aufgesprühte Zusammensetzung außerdem eine Siloxan-Verbindung umfasst.

16. Verglasung nach einem der vorhergehenden Ansprüche, wobei die Zusammensetzung durch einen Tintenstrahl auf der Fläche aufgesprüht wird, die zuvor durch einen Vorgang des Biegens/Härtens gebildet wurde.

## Claims

1. Glazing comprising printed patterns, in particular with a low light transmission, in which the patterns are formed on a glass sheet by an inkjet technique, by means of a composition based on at least one organic polymer, and comprising dispersed opacifying particles, the constituents of the ink being chosen such that the glazing can be recycled after use in glass furnaces, the opacifying particles are of a nature which allows them to be eliminated by combustion in glass furnaces, the printed patterns have, independently of the transmission of the glass sheet, a light transmission which is greater than 1% of the incident light.

2. Glazing according to Claim 1, in which the printed patterns are covered with at least one sheet which extends at least over said patterns and which protects them so that they are protected against chemical or mechanical attacks.

3. Glazing according to Claim 2, in which the printed patterns are protected by a glazing of the "bi-layer" type, composed of a glass sheet combined with an organic sheet of polyurethane type.

4. Glazing according to Claim 2, formed, in a laminated manner, of at least one of the glass sheets constituting the assembly receiving the printed patterns on the face that faces the plastic interlayer sheet.

5. Glazing according to either of Claims 3 and 4, in which the thickness of the dry coating is not greater than 20 µm.

6. Glazing according to one of the preceding claims, in which the polymer or polymers of the composition projected by inkjet are in solution in solvents, which solvents are eliminated by drying after projection onto the glazing.

7. Glazing according to one of the preceding claims, in which the viscosity of the composition is maintained below 100 mPa.s (cP) and preferably 50 mPa.s (cP) by adjusting the polymer, particle and solvent contents.

8. Glazing according to one of the preceding claims, of which the composition used for the inkjet printing comprises polymers of the group comprising acrylic polymers, novalac-type polymers and those of epoxy type.

9. Glazing according to one of the preceding claims, in which the composition projected comprises at most 30% and preferably at most 25% by weight of polymer.

10. Glazing according to one of the preceding claims, in which the opacifying particles are of organic nature.

11. Glazing according to one of Claims 1 to 10, in which the opacifying particles are formed of graphite or of carbon black.

12. Glazing according to one of the preceding claims, in which the particle or particles have a particle size of less than 10 and preferably less than 5 µm.

13. Glazing according to one of the preceding claims, in which the composition projected comprises at most 35% by weight of particles, and preferably at most 25%.

14. Glazing according to one of the preceding claims, in which the composition projected comprises at least one portion of the polymers formed of polyvinylbutyral.

15. Glazing according to one of the preceding claims, in which the composition projected also comprises a siloxane compound.

16. Glazing according to one of the preceding claims, onto which the composition is projected by inkjet onto the surface previously formed in a bending/tempering operation.
